# FASCICULE DE BREVET EUROPEEN

(11) **EP 0 987 095 B1**
(45) Date de publication et mention de la délivrance du brevet: **09.06.2004**
(21) Numéro de dépôt: 99117504.3
(22) Date de dépôt: 04.09.1999
(51) Int. Cl.: B65G 21/12, B31B 1/04, B31B 1/58

(54) **Dispositif de transport central escamotable au sein d'une plieuse-colleuse**
Versenkbare zentrale Zuführvorrichtung für eine Falt-Leimmaschine
Retractable central feeding device in a folding-glueing machine

(30) Priorité: 16.09.1998 CH 188298
(43) Date de publication de la demande: 22.03.2000
(73) Titulaire: BOBST S.A., 1001 Lausanne (CH)
(72) Inventeur: Reymond, Jacques, 1196 Gland (CH); Valterio, Roberto, 1867 Ollon (CH)
(74) Mandataire: Colomb, Claude

(56) Documents cités:
- FR-A- 2 335 341
- US-A- 5 151 075
- PATENT ABSTRACTS OF JAPAN vol. 018, no. 192 (M-1587), 4 avril 1994 (1994-04-04) -& JP 06 000898 A (SAN ENG KK), 11 janvier 1994 (1994-01-11)

## Description

La présente invention a pour objet un dispositif de transport central escamotable au sein d'une plieuse-colleuse; machine communément employée dans l'industrie de l'emballage pour la confection, par exemple, de boîtes en carton à partir d'éléments en plaque découpés.

Comprenant une suite de modules dont le nombre ne dépend que de la complexité des opérations de fabrication que nécessite le type de boîte choisi, de telles machines sont généralement au moins constituées d'un margeur alimentant la production des boîtes découpe par découpe à partir d'une pile, d'un casseur précassant les 1 er et 3e plis entre 90º et 180º puis ouvrant à nouveau la découpe, d'un module de plieurs à crochets qui plient à 180° les pattes avant puis les pattes arrière de la découpe, d'une station d'encollage, d'un plieur pour le pliage des 2e et 4e plis de la découpe, d'un presseur qui comprime les 2e et 4e plis et dépose les boîtes en nappe, et enfin d'un module de réception qui reçoit les boîtes tout en les maintenant pressées pour permettre à la colle de sécher. Le convoyage des découpes d'une station à une autre se fait à l'aide de transporteurs à courroies qui, par friction, saisissent la découpe, soit entre des courroies inférieures et supérieures, soit entre des courroies inférieures et des galets d'appui supérieurs.

C'est dans le plieur, effectuant le pliage des 2e et 4e plis de la découpe, que le dispositif transporteur escamotable trouve son utilisation. Une telle station se compose généralement de transporteurs à courroies, agencés longitudinalement dans le sens du passage des articles défilant, et de plusieurs éléments de pliage tels que courroies, hélices, lames et rampes de pliage. Tous ces éléments sont avantageusement montés en ligne généralement sur trois longerons longitudinaux déplaçables transversalement en fonction du format des découpes à traiter. Dans le plieur, le convoyage des découpes en cours de façonnage est essentiellement assuré par un transporteur central inférieur et supérieur à courroie et par deux paires de transporteurs latéraux inférieurs et supérieurs, également à courroie. Le pliage s'effectue progressivement en suivant la géométrie vrillée d'une courroie de pliage latéral dont le vrillage est assuré par une hélice de pliage.

Lorsqu'on souhaite passer d'un format de travail à un format différent avec le même équipement, il est prévu de pouvoir aisément déplacer les longerons, supportant les courroies de transport et les éléments de pliage, transversalement entre les bâtis de la plieuse-colleuse. Cependant, si la largeur utile maximale d'une telle machine est donnée approximativement par la distance séparant ses deux bâtis, la largeur utile minimale est quant à elle définie par la somme des largeurs des trois courroies qui sont celles des transporteurs latéraux et celle du transporteur central. Si l'on souhaite utiliser cette même plieuse-colleuse pour des travaux faisant appel à des découpes de dimensions plus petites que la taille donnée par cette largeur minimale, il est alors nécessaire de supprimer la place prise par le ou les transporteurs centraux en les ôtant de la plieuse-colleuse. Or, si l'opération consistant à retirer le transporteur central supérieur ne pose aucun problème particulier, ce dernier pouvant être aisément relevé au-dessus de la ligne de production dans une position de repos, il n'en va pas de même pour le transporteur central inférieur qui doit être entièrement démonté. Cette intervention nécessite notamment de détendre et de retirer la courroie d'entraînement du transporteur central, de dégager l'arbre de transmission, et d'extraire complètement le longeron central maintenu entre les bâtis de la machine. L'encombrement, la masse de certaines pièces et le manque d'accès à cette partie centrale de la plieuse-colleuse rend la tâche longue et fastidieuse, sans qu'aucune autre alternative possible ne soit connue à ce jour.

Un dispositif de transport selon le préambule de la revendication 1 est connu du document JP-A-06-000 898.

C'est dans le but de remédier à ces principaux inconvénients que la présente invention propose un dispositif de transport central inférieur escamotable pouvant aisément se loger dans les interstices laissés par les deux transporteurs latéraux mis côte à côte sans qu'aucun d'entre eux ne soit entravé dans son mode de fonctionnement. L'escamotage du transporteur central inférieur s'effectuant bien évidemment que lorsque le transporteur supérieur correspondant se trouve lui-même dans une position escamotée au-dessus de la ligne de production. Pour une plieuse-colleuse travaillant couramment avec de grands et de moyens formats, il devient alors possible, grâce à cet escamotage et dans un temps de préparation jamais égalé, de développer sa largeur utile jusqu'à une dimension minimale avoisinant celle occupée par seul deux courroies mises côte à côte.

A cet effet, la présente invention a pour objet un dispositif de transport central escamotable conforme à ce qu'énonce la revendication 1.

Les avantages résultant de cette invention comprennent notamment:
- un temps de préparation de la machine fortement réduit par une semi-automatisation de l'escamotage dudit dispositif et par la simplicité et le peu d'opérations que nécessite sa mise en service ou hors service,
- l'absence de matériel lourd et encombrant à monter ou à démonter évitant toute manutention peu commode ou d'ampleur conséquente telle que le recours à un moyen de levage quelconque pour retirer le transporteur central,
- un temps de réglage très court rendu possible notamment en s'abstenant de devoir détendre et retendre ou même replacer la courroie inférieure lors de chaque escamotage du transporteur central,
- la dispense de devoir retirer toute pièce du bâti de la plieuse-colleuse, tel que l'arbre d'entraînement ou les axes de coulissement des longerons,
- et en conséquence, la réduction du prix de revient de toute production d'emballage nécessitant une telle adaptation du module de pliage.

Dans le but de définir quelques termes introduits dans la présente description et décrivant la position de certains éléments au sein de la plieuse-colleuse, on citera les appellations "côté conducteur" (C.C.) et "côté opposé conducteur" (C.O.C.) employées sans conteste pour faire référence à un côté désigné par rapport à l'axe médian longitudinal de la machine. Ce choix permet d'éviter toute confusion survenant avec les dénominations conventionnelles gauche et droite dépendantes du point de vue de l'observateur. Dans une optique semblable, on décrira l'orientation de certains mouvements ou certaines pièces par les termes usuels "longitudinal" et "transversal" se référant toujours à l'axe médian de la machine dont la direction est déterminée par celle du défilement des éléments en plaque. Enfin on précisera aussi que les termes "amont" et "aval" font quant à eux référence au sens de défilement des éléments en plaque dans la plieuse-colleuse.

L'invention sera mieux comprise à l'étude d'un mode de réalisation pris à titre nullement limitatif et illustré par les figures annexées dans lesquelles:
- les figures 1a et 1b montrent les quatre pièces principales constituant la structure du dispositif en question, simultanément dans une position de travail et dans la position escamotée,
- les figures 2a et 2b représentent une vue de face du dispositif de transport central escamotable, respectivement les parties situées en aval et en amont de l'axe de gravité de ce dispositif,
- la figure 3 est une vue en coupe de la figure 2b selon la ligne D-D,
- les figures 4a et 4b sont des vues en coupes selon la ligne C-C de la figure 2b, illustrant respectivement le transporteur central seul en position de travail, et ce même transport dans une position escamotée entre les deux transporteurs latéraux lorsque ces derniers occupent une largeur minimale.
- la figure 5 montre, dans une vue en perspective, l'escamotage de la courroie du transporteur central dans les courroies des deux transporteurs latéraux lorsque ces derniers occupent une largeur minimale,
- les figures 6 et 8 sont des vues en coupe de la figure 2b, respectivement selon les lignes B-B, E-E,
- la figure 7 représente une vue de dessus de l'extrémité amont du dispositif de transport central escamotable.

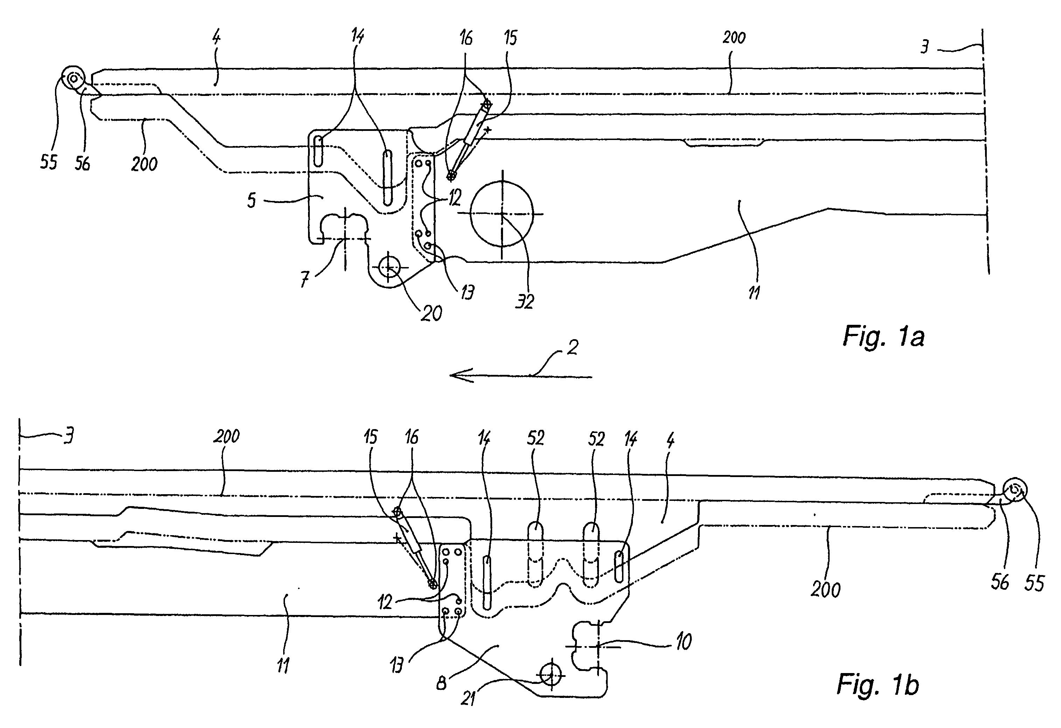

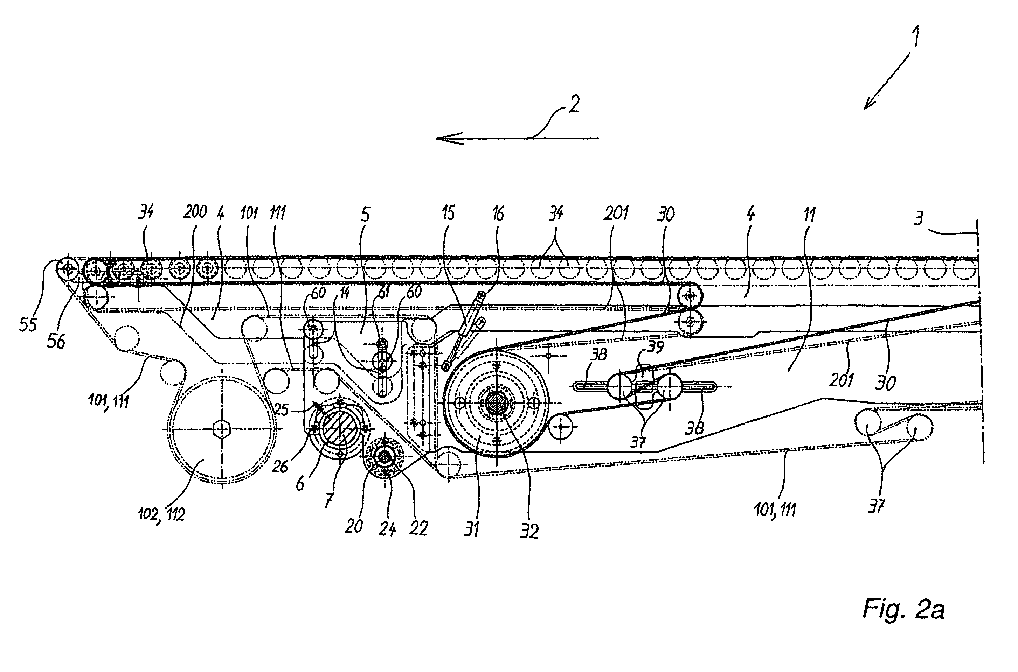

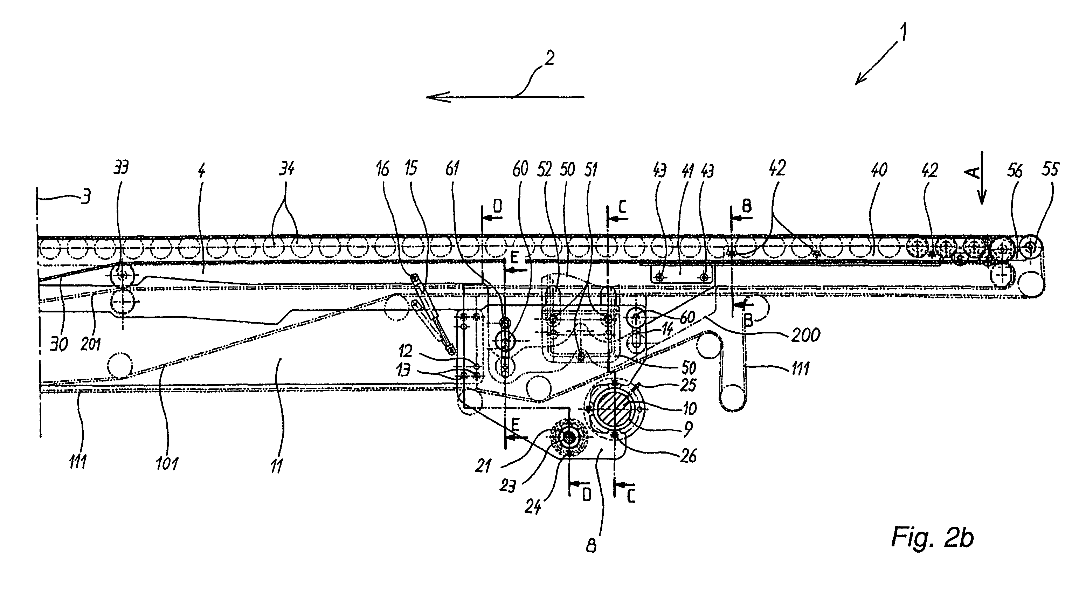

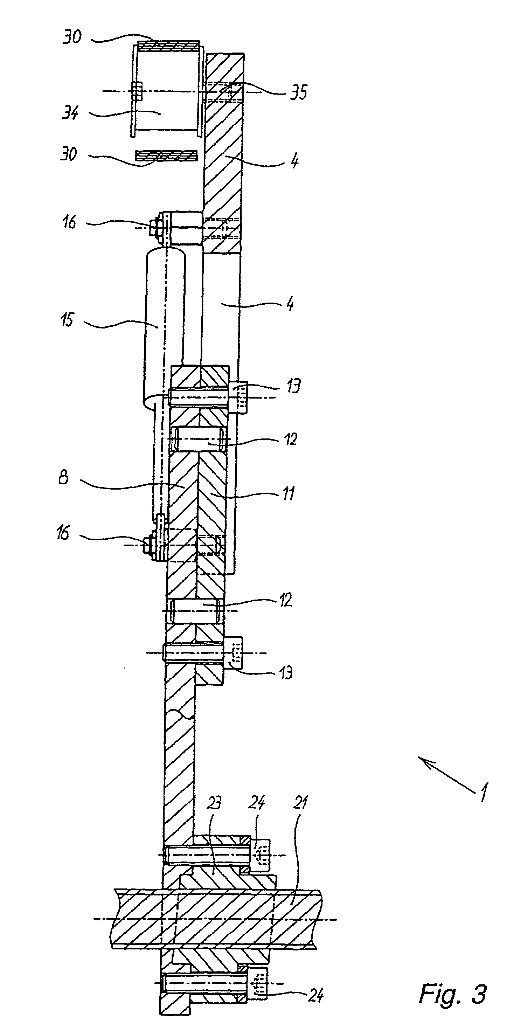

Les figures 1a et 1b représentent l'assemblage des principales pièces formant la structure portante du transporteur central escamotable 1. Conformément à la flèche 2, indiquant le sens de déplacement des articles dans la plieuse-colleuse, la figure 1a montre la partie située en aval de l'axe de gravité 3 du dispositif, et la figure 1b représente la partie située à l'amont de ce même axe de gravité. Quatre pièces maîtresses constituent les principaux éléments de cette structure, parmi lesquelles un longeron supérieur 4 y est représenté simultanément en trait continu dans une position de travail et en trait mixte dans une position escamotée 200 afin que le mouvement d'une position à l'autre puisse être au mieux représenté. Ce longeron supérieur est d'une part soutenu à l'aval par un étrier 5 coulissant transversalement par l'intermédiaire d'un palier lisse 6 (figure 2a) sur un axe 7 reliant les deux bâtis latéraux non représentés de la plieuse-colleuse, et d'autre part est soutenu à l'amont par un autre étrier 8 coulissant simultanément, par l'intermédiaire d'un palier lisse 9 (figure 2b), sur un axe 10 identique au précédent. Les deux étriers 5 et 8 sont reliés par un longeron inférieur 11 grâce à des goupilles de centrage 12 et des vis de fixation 13 (figure 3). Le longeron supérieur 4 peut être abaissé suivant un mouvement fauchant grâce à deux paires de rainures verticales 14 usinées dans les faces des étriers 5 et 8 (figures 1a et 1b).

L'actionnement de ce mouvement se fait manuellement grâce au profil ergonomique du longeron supérieur 4, et le déplacement de cette pièce massive est facilité par le concours de deux organes amortisseurs 15 constitués chacun d'un cylindre et d'un piston pneumatique. L'une des extrémités de ces organes amortisseurs est rendue solidaire du longeron supérieur 4, alors que l'autre extrémité est liée au voisinage de l'une des deux extrémités du longeron inférieur 11. Des axes 16 vissés dans les longerons supérieurs et inférieurs constituent les moyens de fixation des organes amortisseurs laissés libres en rotation. Ainsi, seul le longeron supérieur 4 peut se déplacer verticalement pour passer d'une position de travail à une position escamotée 200 représentée en trait mixte (figures 1a, 1b).

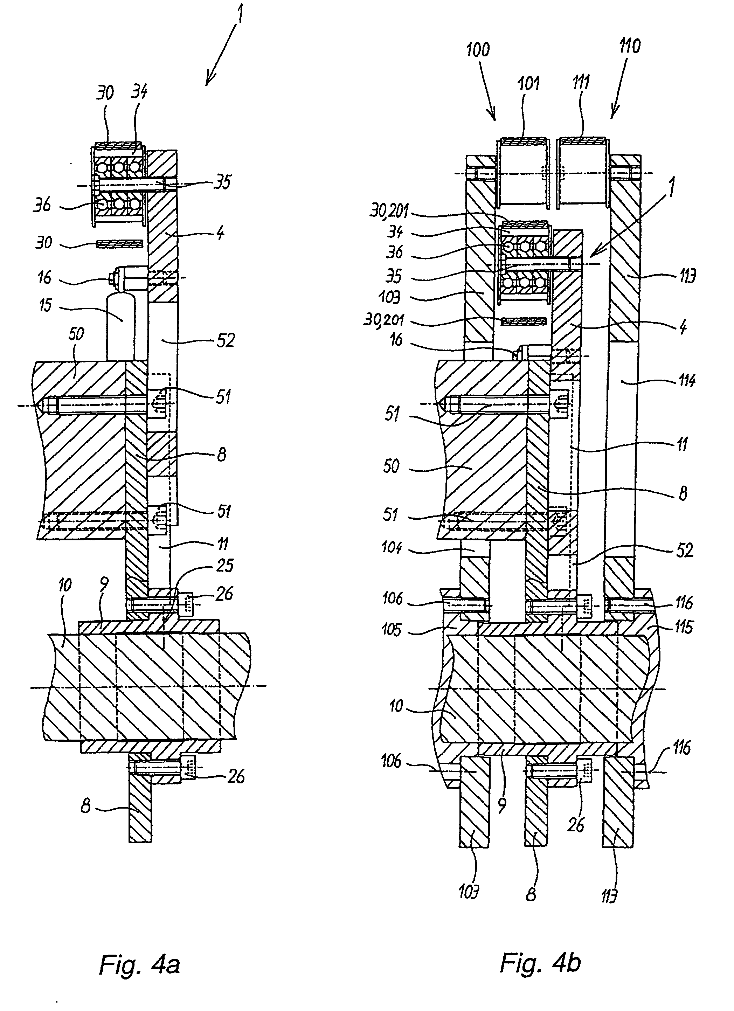

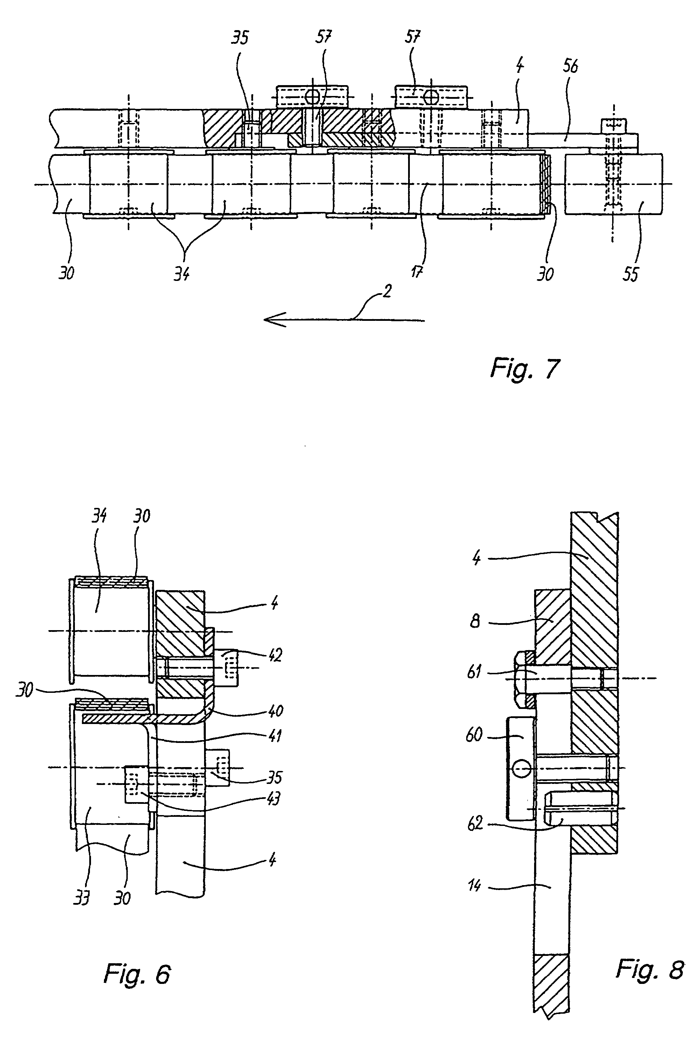

Les figures 2a et 2b montrent les moitiés aval et amont du dispositif 1 dans une vue de face agrémentée de la position escamotée 200 occupée par le longeron supérieur 4. Sur ces mêmes figures y sont également représentés en traits mixtes, d'une part le parcours sinueux 201 que suit une courroie 30 du transporteur central 1 lorsque ce dispositif se trouve dans sa position escamotée, et d'autre part les deux courroies 101 et 111, respectivement du transporteur latéral 100 situé du côté conducteur, et du transporteur latéral 110 situé du côté opposé conducteur (figure 4b) par rapport à l'axe médian 17 de la courroie centrale 30 (figure 7).

Soutenues par leurs extrémités entre les deux bâtis de la plieuse-colleuse, deux vis 20 et 21 permettent d'actionner le positionnement latéral du dispositif 1 entre les bâtis de la plieuse-colleuse. Ces vis traversent respectivement deux écrous 22 et 23 maintenus par des vis 24, pour l'un à l'étrier 5, et pour l'autre à l'étrier 8 (figure 3). Coulissant sur les axes 7 et 10, l'ensemble du dispositif 1 est porté par les paliers lisses 6 et 9 lubrifiés par des graisseurs 25 et rendus solidaires des étriers respectifs 5 et 8 par des vis 26 (figure 4a).

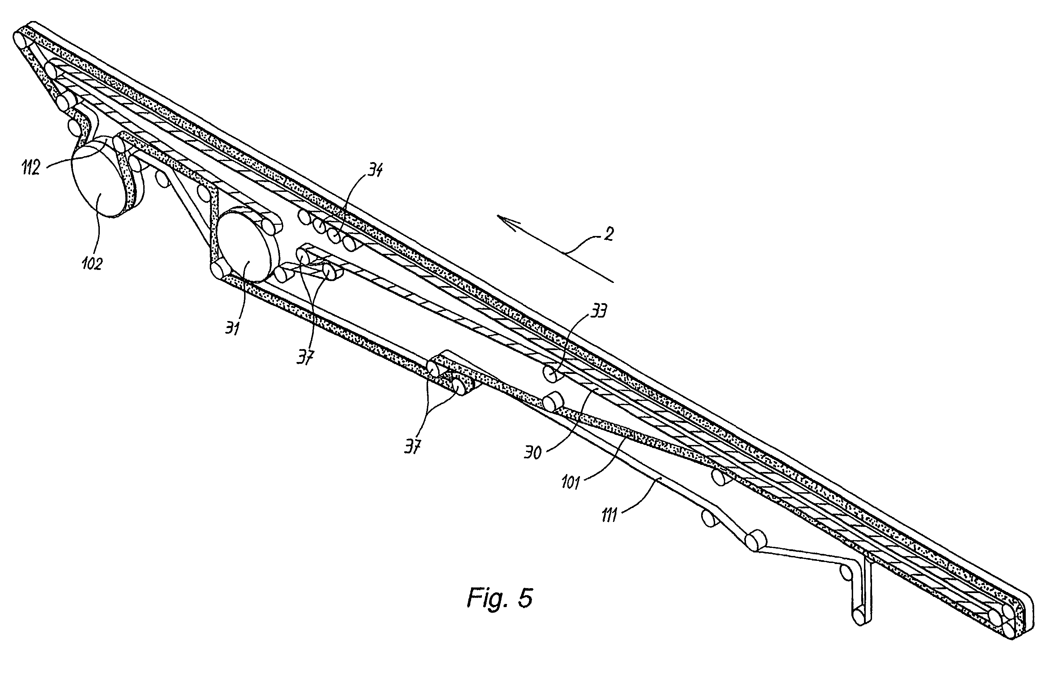

La figure 5 donne une représentation en perspective du cheminement des trois courroies des transporteurs 1, 100, 110, et montre la position prise par chacune de ces courroies lorsque le dispositif de transport central 1 se trouve en position escamotée, imbriqué dans les deux transporteurs latéraux 100 et 110. L'entraînement des courroies 101 et 111 des transporteurs latéraux se fait par l'intermédiaire de deux poulies respectives 102 et 112. Etant coaxiaux, ces deux entraînements sont dépendants l'un de l'autre, ce qui n'est pas le cas pour celui de la courroie 30 du transporteur central escamotable 1 qui possède une poulie d'entraînement 31 montée sur un arbre à 6 pans 32 indépendant (figure 2a). Dans son parcours, la courroie 30 chemine autour d'une pluralité de galets de renvoi 33 et de galets de support 34, lesquels sont chacun rendus solidaires du longeron supérieur 4 ou inférieur 11 grâce à une vis 35 traversant leur roulement à billes 36 (figure 4a). Des paires de galets tendeurs 37 sont insérés dans le parcours sinueux de chacune des courroies et permettent de compenser d'éventuelles variations dans leur longueur. Le réglage de la tension de la courroie s'effectue manuellement par la rotation d'une vis de réglage 38, logée dans une ouverture 39 usinée dans le flanc du transporteur correspondant (figure 2a). La rotation de la vis de réglage 38 a pour effet de déplacer les deux galets tendeurs 37 dans une direction opposée, ce qui permet de tendre ou de détendre individuellement chaque courroie.

Comme mieux représenté dans la figure 6 décrivant une coupe verticale de la partie amont du dispositif 1 illustré à la figure 2b, des tôles 40 et 41 pliées à angle droit sont fixées respectivement par une pluralité de vis 42 et 43 contre la face C.O.C. ou C.C. du longeron supérieur 4. Ces tôles ont pour rôle de soutenir la courroie 30 et d'éviter son éventuel fléchissement qui pourrait rendre l'escamotage du dispositif central 1 incommode.

Dans une plieuse-colleuse en cours de façonnage, le dispositif de transport central est généralement surmonté d'un transporteur supérieur à courroie facilitant le convoyage des découpes prises entre les courroies des transporteurs inférieur et supérieur. A cet effet, le dispositif 1 de la présente invention peut être équipé d'une potence 50, coudée vers le haut, et pouvant soutenir un quelconque transporteur supérieur conventionnel. Les figures 2b et 4a montrent l'extrémité de la potence 50 qui est fixée perpendiculairement par trois vis 51 contre la face côté conducteur de l'étrier 8. Afin de ne pas entraver le mouvement vertical du longeron supérieur 4, deux rainures 52 y sont usinées verticalement et permettent à ce dernier de se mouvoir sans encombre autour des deux vis supérieures 51.

La figure 4b montre, dans une vue en coupe, la position occupée par le transporteur central 1 escamoté entre les deux transporteurs latéraux 100 et 110 conventionnels. Ces derniers étant notamment chacun constitué d'un longeron 103, respectivement 113, d'une ouverture 104, respectivement 114, permettant le passage de la potence 50, et d'un palier lisse 105, respectivement 115, maintenu contre le longeron du transporteur correspondant par des vis 106, respectivement 116.

Comme le montre en détail la figure 7, à chacune des extrémités du longeron supérieur 4 se trouvent un galet 55 aligné sur l'axe 17. Ce galet 55 est monté sur une rallonge amovible 56 maintenue par deux vis moletées 57 contre la face échancrée du longeron supérieur 4 du côté conducteur.

L'escamotage du dispositif faisant l'objet de la présente invention s'effectue en retirant tout d'abord les deux rallonges 56 équipées des galets 55. Il convient ensuite de libérer le longeron supérieur 4 en desserrant deux paires de vis moletées 60 (figure 8) qui le maintiennent serré contre les étriers 5 et 8. Grâce aux organes amortisseurs 15, le longeron supérieur reste en équilibre sans occasionner un quelconque danger pouvant résulter du desserrage des vis moletées 60. Le longeron supérieur peut ensuite être abaissé d'un côté puis de l'autre en exerçant une force verticale sur son arête supérieure. Son mouvement vertical est guidé par des axes 61 et des goupilles 62, respectivement vissés et chassées dans le longeron supérieur 4, qui coulissent sans jeux dans les deux paires de rainures 14 (figure 2a). Une fois le longeron supérieur 4 abaissé, les vis moletées 60 peuvent être resserrées et l'ensemble du dispositif escamotable 1 peut être déplacé latéralement le long des axes transversaux 7 et 10 grâce au vis de chariotage 20 et 21. L'escamotage du transporteur central peut donc être effectué sans qu'il soit notamment nécessaire d'enlever ou de détendre sa courroie 30. En effet, les déplacements verticaux du longeron supérieur n'engendrent qu'une variation minime de la longueur de la courroie d'entraînement 30 par rapport à sa longueur totale. Il est alors suffisant de ne bénéficier que de la tolérance de l'élasticité de la courroie pour rendre possible ce déplacement sans y engendrer des contraintes intolérables et sans devoir recourir à d'autres manipulations quelles qu'elles soient.

De nombreuses améliorations peuvent être apportées à ce dispositif dans le cadre des revendications.

## Revendications

1. Dispositif de transport central escamotable (1) au sein d'une plieuse-colleuse composée d'au moins deux transporteurs latéraux (100, 110) placés entre deux bâtis et utilisés pour le façonnage d'articles en plaque tels que du papier ou du carton en vue de la production d'emballages, comprenant notamment une courroie centrale (30) supportée par une structure portante formée de quatre éléments solidaires (4, 5, 8, 11), déplaçable transversalement entre lesdits transporteurs latéraux (100, 110), dont une des parties est constituée par un longeron supérieur (4) déplaçable verticalement selon un mouvement fauchant depuis une position de travail vers une position escamotée de rangement final et inversement, sans qu'il soit nécessaire de détendre ladite courroie centrale (30) ou de déplacer des organes de transmission (31, 32) nécessaires au fonctionnement dudit dispositif, **caractérisé en ce** le longeron supérieur (4) est déplaçable exclusivement verticalement et en ce que des organes amortisseurs (15) autonomes sont interposés entre le longeron supérieur (4) et un autre des quatre éléments solidaires (5, 8, 11).

2. Dispositif selon la revendication 1, **caractérisé en ce qu'**il demeure, en position escamotée, agencé dans des interstices formés par la géométrie interne des deux transporteurs latéraux (100, 110) lorsque ceux-ci sont disposés serrés l'un contre l'autre.

3. Dispositif selon la revendication 1 ou 2, **caractérisé en ce que** son agencement en position escamotée n'entrave ni le fonctionnement des transporteurs latéraux (100, 110), ni celui de la courroie centrale (30).

4. Dispositif selon la revendication 1, **caractérisé en ce que** le déplacement du longeron supérieur (4) peut être verrouillé dans une position choisie.

5. Dispositif selon la revendication 1, **caractérisé en ce que** la courroie centrale (30) est soutenue dans sa longueur en partie par des tôles (40, 41).

6. Dispositif selon la revendication 1, **caractérisé en ce que** les extrémités du longeron supérieur (4) sont équipées de rallonges d'appoint amovibles (56).

## Patentansprüche

1. Versenkbarer Zentralförderer (1) in einer Faltschachtel-Klebemaschine, die aus wenigstens zwei Seitenförderern (100, 110) besteht, welche zwischen zwei Rahmen angeordnet und für die Verarbeitung von plattenartigen Werkstücken wie Papier oder Karton zum Zwecke der Herstellung von Verpackungen verwendet werden, umfassend einen Zentralriemen (30), der von einer aus vier voneinander abhängigen Elementen (4, 5, 8, 11) gebildetenTrägerstruktur getragen wird, die zwischen den besagten Seitenförderer (100, 110) querbewegt werden kann, wobei eines der Elemente aus einem oberen Längsträger (4) besteht, welcher vertikal zwischen einer Arbeitsposition und einer versenkten Endposition bewegt werden kann, ohne dass der besagte Zentralriemen (30) entspannt oder irgendein für den Betrieb des besagten Förderers erforderliches Übertragungsmittel (31, 32) bewegt werden muss, **dadurch gekennzeichnet, dass** der obere Längsträger (4) ausschliesslich vertikal bewegt werden kann und dass unabhängige Dämpfungsorgane (15) zwischen dem oberen Längsträger (4) und einem anderen der vier voneinander abhängigen Elemente (5, 8, 11) angeordnet sind.

2. Förderer gemäss Patentanspruch 1, **dadurch gekennzeichnet, dass** er in versenkter Position in Zwischenräumen untergebracht ist, welche durch die interne Geometrie der zwei Seitenförderer (100, 110) gebildet werden, wenn letztere dicht nebeneinander angeordnet sind.

3. Förderer gemäss Patentanspruch 1 oder 2, **dadurch gekennzeichnet, dass** seine Anordnung in versenkter Position weder den Betrieb der Seitenförderer (100, 110) noch denjenigen des Zentralriemens (30) behindert.

4. Förderer gemäss Patentanspruch 1, **dadurch gekennzeichnet, dass** die Bewegung des oberen Längsträgers (4) in einer gewählten Position blockiert werden kann.

5. Förderer gemäss Patentanspruch 1, **dadurch gekennzeichnet, dass** der Zentralriemen (30) in seiner Länge zum Teil von Platten (40, 41 ) gestützt wird.

6. Förderer gemäss Patentanspruch 1, **dadurch gekennzeichnet, dass** die Enden des oberen Längsträgers (4) mit abnehmbaren Verlängerungen (56) ausgestattet sind.

## Claims

1. Retractable central conveyor (1) in a folder-gluer that has at least two lateral conveyors (100, 110) placed between two frames and used for converting plate-like workpieces such as paper or cardboard for producing packaging, comprising a central belt (30) supported by a bearing structure composed of four interdependent parts (4, 5, 8, 11), transversely movable between said lateral conveyors (100, 110), one of said parts consisting of an upper longitudinal bar (4) vertically movable between a working position and a final retracted position without requiring to slacken said central belt (30) or move any transmission means (31, 32) necessary for operating the said conveyor, **characterized in that** the upper longitudinal bar (4) is movable exclusively in the vertical plane and that independent damping means (15) are inserted between the upper longitudinal bar (4) and another one of the four interdependent parts (5, 8, 11 ).

2. Conveyor according to claim 1, **characterized in that**, in retracted position, it is arranged in gaps formed by the internal geometry of the two lateral conveyors (100, 110) when the latter are closely arranged side by side.

3. Conveyor according to claim 1 or 2, **characterized in that** its arrangement in the retracted position does not interfere with the operating of the lateral conveyors (100, 110), or of the central belt (30).

4. Conveyor according to claim 1, **characterized in that** the upper longitudinal bar (4) is lockable in a chosen position in its range of movement.

5. Conveyor according to claim 1, **characterized in that** the central belt (30) is partly supported in its length by plates (40, 41).

6. Conveyor according to claim 1, **characterized in that** the ends of the upper longitudinal bar (4) are equipped with removable auxiliary extensions (56).
